# EUROPÄISCHE PATENTSCHRIFT

(11) **EP 1 837 586 B1**
(45) Veröffentlichungstag und Bekanntmachung des Hinweises auf die Patenterteilung: **24.10.2012**
(21) Anmeldenummer: 07004976.2
(22) Anmeldetag: 10.03.2007
(51) Int. Cl.: F16P 3/14, G01S 17/02

(54) **Vorrichtung zur Überwachung eines Gefahrenbereichs an einem Arbeitsmittel**
Device for monitoring a dangerous area of work equipment
Dispositif de surveillance d'une zone dangereuse près d'une machine

(30) Priorität: 21.03.2006 DE 102006012823
(43) Veröffentlichungstag der Anmeldung: 26.09.2007
(73) Patentinhaber: Leuze electronic GmbH + Co. KG, 73277 Owen/Teck (DE)
(72) Erfinder: Lohmann, Lutz, Dr., 82140 Olching (DE)
(74) Vertreter: Ruckh, Rainer Gerhard

(56) Entgegenhaltungen:
- EP-A- 1 482 238
- EP-A- 1 544 535
- EP-A- 1 586 805
- DE-A1- 10 026 305
- DE-A1- 10 152 543
- DE-A1- 10 245 720
- DE-A1- 10 310 768
- DE-A1-102004 043 515
- DE-B3- 10 224 031
- US-A1- 2002 061 134

## Beschreibung

Die Erfindung betrifft eine Vorrichtung zur Überwachung eines Gefahrenbereichs an einem Arbeitsmittel gemäß dem Oberbegriff des Anspruchs 1.

Eine derartige Vorrichtung ist aus der DE 101 52 543 A1 bekannt. Die dort beschriebene Vorrichtung dient zum Steuern wenigstens einer sicherheitsrelevanten Funktion, z.B. eines Notstopps einer Maschine. Ein Überwachungsbereich wird von wenigstens einem orts- und zeitauflösenden Sensor überwacht, mit dem die Position, die Bewegungsrichtung und/oder die Bewegungsgeschwindigkeit einer Person erkannt wird. Eine Sicherheitsgrenze oder ein Sicherheitsbereich begrenzt einen Gefahrenbereich und definiert einen Sicherheitsabstand zur Maschine. Bei Eindringen in den Gefahrenbereich wird die sicherheitsrelevante Funktion ausgelöst. Die Lage der Sicherheitsgrenze und/oder die Ausdehnung des Sicherheitsbereichs wird in Abhängigkeit von der Position, der Bewegungsrichtung und/oder Bewegungsgeschwindigkeit situationsbedingt variabel festgelegt.

Eine weitere Vorrichtung zur Absicherung von Gefahrenbereichen ist aus der DE 102 24 031 A1 bekannt. Diese Vorrichtung weist wenigstens ein redundantes Kamerasystem bestehend aus zwei Kameras sowie einen diesen vorgeordneten Strahlteiler auf. Über den Strahlteiler sind Bilder des Erfassungsbereiches auf beide Kameras zur Erfassung von sicherheitskritischen Objekten innerhalb wenigstens einer Schutzzone abbildbar. Die Vorrichtung weist weiterhin zwei Rechnereinheiten auf, wobei jeweils eine Rechnereinheit an eine der Kameras zur Auswertung der dort erfassten Bildinformationen angeschlossen ist. Beide Rechnereinheiten sind zur gegenseitigen Überprüfung miteinander gekoppelt.

Des Weiteren weist die Vorrichtung einen von den Rechnereinheiten angesteuerten Schaltausgang auf. Über den Schaltausgang ist das Arbeitsmittel nur dann in Betrieb gesetzt, falls sich kein sicherheitskritisches Objekt innerhalb der Schutzzone befindet.

Die beiden Kameras bilden ein redundantes Kamerasystem, durch welches eine hohe Detektionssicherheit bei der Objekterfassung erzielt wird. Die Detektionssicherheit wird durch die den Kameras nachgeordnete zweikanalige Rechnerstruktur weiter gewährleistet.

Dabei erfolgt die Bildverarbeitung derart, dass durch den Strahlteiler jeweils dasselbe Bild von dem Erfassungsbereich auf die Kameras abgebildet wird. Zur Objekterfassung werden die Bildinformationen, die von einer Kamera generiert werden, jeweils in einer dieser nachgeordneten Rechnereinheit ausgewertet. Zudem erfolgt ein Vergleich der Auswerteergebnisse beider Rechnereinheiten, wobei dieser Vergleich vorzugsweise auf einer Bildmerkmalsebene erfolgt.

Der Erfindung liegt die Aufgabe zugrunde eine Vorrichtung bereitzustellen, mittels derer eine sichere Überwachung auch komplexer Gefahrenbereiche ermöglicht wird.

Zur Lösung dieser Aufgabe sind die Merkmale des Anspruchs 1 vorgesehen. Vorteilhafte Ausführungen und zweckmäßige Weiterbildungen der Erfindung sind in den Unteransprüchen beschrieben.

Die erfindungsgemäße Vorrichtung dient zur Überwachung eines Gefahrenbereichs an einem Arbeitsmittel und umfasst eine Anordnung von Sensoren, welche jeweils eine Kamera zur Erfassung einer Schutzzone als Teil des Gefahrenbereichs aufweisen. Weiterhin ist eine Anschalteinheit vorgesehen, in welche von den Sensoren generierte Signale eingelesen werden um ein Schaltsignal zu generieren, wobei in Abhängigkeit des Schaltsignals das Arbeitsmittel aktiviert oder abgeschaltet ist. Das Arbeitsmittel wird abgeschaltet, falls in der Anschalteinheit bei Erfassen eines sicherheitskritischen Objekts innerhalb des Gefahrenbereichs als Schaltsignal eine Objektmeldung generiert wird. Bei Erfassen eines nichtsicherheitskridschen Objekts innerhalb des Gefahrenbereichs wird wenigstens ein Bereich dieses Gefahrenbereichs als Muting-Bereich definiert, so dass ein Eindringen eines Objekts in diesen Bereich nicht zu einer Generierung einer Objektmeldung führt.

Die erfindungsgemäße Vorrichtung bildet ein verteiltes System, wobei mit den einzelnen optischen Sensoren unterschiedliche Teilbereiche des Gefahrenbereichs überwacht werden können. Dabei können die optischen Sensoren so angeordnet sein, dass dieser in unterschiedlichen Blickwinkeln auf den Gefahrenbereich ausgerichtet sind, wobei die mit den einzelnen optischen Sensoren erfassten Schutzzonen teilweise überlappen können. Mit einer derartigen Anordnung können Abschattungen von Teilbereichen des Gefahrenbereichs durch eindringende Objekte oder dort angeordnete stationäre Gegenstände vermieden werden. Derartige Abschattungen stellen Totbereiche dar, in welchen keine Objekterfassung mehr möglich wäre. Mit der Mehrfachanordnung der optischen Sensoren können diese Totbereiche drastisch reduziert oder vollständig vermieden werden, so dass innerhalb des gesamten Gefahrenbereichs eine sichere Objektdetektion möglich ist.

In einer weiteren Ausführungsform können die optischen Sensoren und damit die von diesen erfassten Schutzzonen eine Hintereinanderanordnung bilden, so dass zu erfassende Objekte die einzelnen Schutzzonen nacheinander durchqueren. In diesem Fall können in der Anschalteinheit aus den Signalen der einzelnen optischen Sensoren Informationen über die Bewegungsrichtung und Geschwindigkeit von Objekten gewonnen werden.

In der Anschalteinheit können unmittelbar die in den optischen Sensoren generierten Messwerte ausgewertet werden, um daraus das Schaltsignal zu generieren. Alternativ kann in den Auswerteeinheiten der optischen Sensoren eine Vorverarbeitung der Messwerte erfolgen, so dass anhand der vorverarbeiteten Messwerte in der Anschalteinheit das Schaltsignal generiert wird. Schließlich kann in den Auswerteeinheiten der optischen Sensoren eine komplette Auswertung der Messwerte derart erfolgen, dass in jedem optischen Sensor ein separates Objektfeststellungssignal generiert wird. Dann kann in der Anschalteinheit aus den einzelnen Objektfeststellungssignalen, im einfachsten Fall durch logische Verknüpfungen der Objektfeststellungssignale, das Schaltsignal generiert werden.

Als weitere Funktion übernimmt die Anschalteinheit vorteilhaft die Synchronisierung der einzelnen optischen Sensoren. Zur Synchronisierung der optischen Sensoren werden diese vorteilhaft so betrieben, dass das Beleuchtungssystem eines optischen Sensors jeweils in den Sendepausen der Beleuchtungssysteme der anderen optischen Sensoren der Vorrichtung aktiviert ist, wodurch eine unerwünschte gegenseitige optische Beeinflussung der optischen Sensoren vermieden werden kann.

Im einfachsten Fall weisen die Auswerteeinheiten der optischen Sensoren und die Anschalteinheit jeweils einen einkanaligen Aufbau auf. Zur Erfüllung der Sicherheitsanforderungen im Bereich des Personenschutzes weisen die Auswerteeinheiten der optischen Sensoren und/oder die Anschalteinheit bevorzugt einen redundanten, zweikanaligen Aufbau auf.

Erfindungsgemäß wird mit der erfindungsgemäßen Vorrichtung eine Doppelfunktion derart erfüllt, dass mit deren optischem Sensor nicht nur eine Gefahrenbereichsüberwachung durchgeführt werden kann sondern zugleich auch eine Mutingfunktion bereitgestellt wird, mittels derer die Verfügbarkeit des Arbeitsmittels erhöht wird.

Zur Durchführung der Gefahrenbereichsüberwachung wird mit den Kameras der optischen Sensoren der Vorrichtung detektiert, ob ein sicherheitskritisches Objekt in den Gefahrenbereich eindringt. Ist dies der Fall, generiert die Anschalteinheit als Schaltsignal eine Objektmeldung, wodurch das Arbeitsmittel abgeschaltet wird um insbesondere eine Gefährdung von Personen in dem Gefahrenbereich auszuschließen.

Dabei erfolgt in der Anschalteinheit eine Unterscheidung von sicherheitskritischen Objekten wie Personen einerseits und nicht sicherheitskritischen Objekten andererseits. Dringt ein nicht sicherheitskritisches Objekt in den Gefahrenbereich ein, so erfolgt ein Muting derart, dass wenigstens ein Bereich des Gefahrenbereichs überbrückt, das heißt gemutet wird, so dass dann in diesen Bereich eindringende Objekte, unabhängig davon, ob diese sicherheitskritische Objekte oder nicht sicherheitskritische Objekte sind, nicht zu einem Abschalten des Arbeitsmittels führen.

Damit führen unkritische Objekteingriffe in dem Gefahrenbereich, die beispielsweise durch Werkstücke bedingt sind, die mit dem Arbeitsmittel bearbeitet werden müssen, nicht zu einem unerwünschten Stillstand des Arbeitsmittels und so zu einer signifikant erhöhten Verfügbarkeit des Arbeitsmittels.

In der Anschalteinheit wird zur Unterscheidung von sicherheitskritischen Objekten und nicht sicherheitskritischen Objekten eine vorgegebene Anzahl von Bildpunkten der Kameras der einzelnen optischen Sensoren ausgewertet. Generell werden somit bevorzugt nur Teilbereiche der Kameras der optischen Sensoren zur Erkennung von nichtsicherheitskritischen Objekten zur Durchführung des Muting ausgewertet. Besonders vorteilhaft werden dabei die Flanken von in den Gefahrenbereich eindringenden Objekten ausgewertet und hierbei Unterscheidungen zwischen sicherheitskritischen Objekten und nicht sicherheitskritischen Objekten getroffen. Zweckmäßigerweise können dabei in Einlernvorgängen die Vorderfronten von in den Gefahrenbereichen eindringenden nicht sicherheitskritischen Objekten und Teilen hiervon eingelernt werden. Dabei können einzelne Merkmale von nichtsicherheitskritischen Objekten, wie zum Beispiel unterschiedliche Flanken derartiger Objekte mit unterschiedlichen optischen Sensoren erfasst werden. Die Einzelinformationen der einzelnen optischen Sensoren werden dann in der Anschalteinheit zur Generierung des Muting-Bereichs ausgewertet. Der Muting-Bereich selbst kann sich über die Schutzzonen mehrerer optischer Sensoren erstrecken.

Alternativ können bestimmte, die nicht sicherheitskritischen Objekte charakterisierende Parameter, wie zum Beispiel Mindestabmessungen derartiger nicht sicherheitskritischer Objekte, in der Auswerteeinheit abgespeichert werden. Anhand derartiger abgespeicherter Daten können dann die nicht sicherheitskritischen Objekte von sicherheitskritischen Objekten unterschieden werden.

Durch eine geeignete zeitliche und räumliche Vorgabe des überbrückten Bereichs, das heißt des Muting-Bereichs, ist eine flexible Anpassung von Bahnkurven nicht sicherheitskritischer Objekte innerhalb des Gefahrenbereichs möglich. Damit wird einerseits erreicht, dass ein Eindringen von nicht sicherheitskritischen Objekten in den Gefahrenbereich nicht zu einem unerwünschten Abschalten des Arbeitsmittels führt, andererseits in den nicht gemuteten Bereichen des Gefahrenbereichs noch sicherheitskritische Objekte detektiert werden können, um dann im Gefahrenfall das Arbeitsmittel abschalten zu können. Im einfachsten Fall beschränkt sich der Muting-Bereich auf den Teil des Gefahrenbereichs, innerhalb derer ein nicht sicherheitskritisches Objekt angeordnet ist. Weiterhin kann der Muting-Bereich auch eine größere Ausdehnung als die nicht sicherheitskritischen Objekte aufweisen und sich im Grenzfall über den ganzen Gefahrenbereich erstrecken. Prinzipiell ist auch die Vorgabe mehrerer Muting-Bereiche innerhalb des Gefahrenbereichs möglich.

Schließlich ist auch eine geeignete zeitliche Vorgabe der Aktivierung des Muting-Bereichs durch die Anschalteinheit möglich. Im einfachsten Fall bleibt der Muting-Bereich so lange aktiv, wie ein nicht sicherheitskritisches Objekt innerhalb des Gefahrenbereichs angeordnet ist. Insbesondere bei Arbeitsprozessen mit vorgegebenen Bearbeitungsabläufen, bei welchen beispielsweise sichergestellt ist, dass nach Eindringen eines nicht sicherheitskritischen Objekts in den Gefahrenbereich für eine vorgegebene Zeit kein sicherheitskritisches Objekt in den Gefahrenbereich eindringen kann, kann über die Anschalteinheit eine Zeitfunktion definiert werden, über welche die Zeitdauer der Aktivierung des Muting-Bereichs vorgebbar ist.

Die Erfindung wird im Nachstehenden anhand der Zeichnungen erläutert. Es zeigen
- Figur 1:: Schematische Darstellung einer Vorrichtung zur Überwachung eines Gefahrenbereichs.
- Figur 2:: Schematische Darstellung eines optischen Sensors für die Vorrichtung gemäß Figur 1.
- Figur 3:: Schematische Darstellung der Anschalteinheit der Vorrichtung gemäß Figur 1.
- Figur 4:: Erstes Applikationsbeispiel der Vorrichtung gemäß Figur 1 zur Überwachung eines Gefahrenbereichs.
- Figur 5:: Zweites Applikationsbeispiel der Vorrichtung gemäß Figur 1 zur Überwachung eines Gefahrenbereichs.

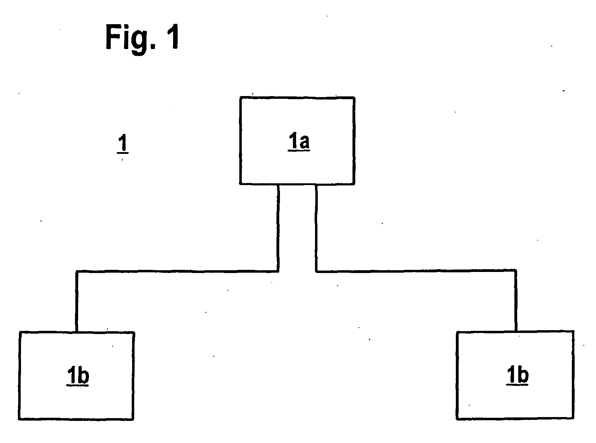

Figur 1 zeigt ein Ausführungsbeispiel einer Vorrichtung 1 zur Überwachung eines Gefahrenbereichs. Die Vorrichtung 1 umfasst eine Anschalteinheit 1a, an welche zwei optische Sensoren 1b angeschlossen sind. Die optischen Sensoren 1b sind im vorliegenden Fall identisch ausgebildet. Prinzipiell können auch mehrere optische Sensoren 1b an die Anschalteinheit 1a angeschlossen sein.

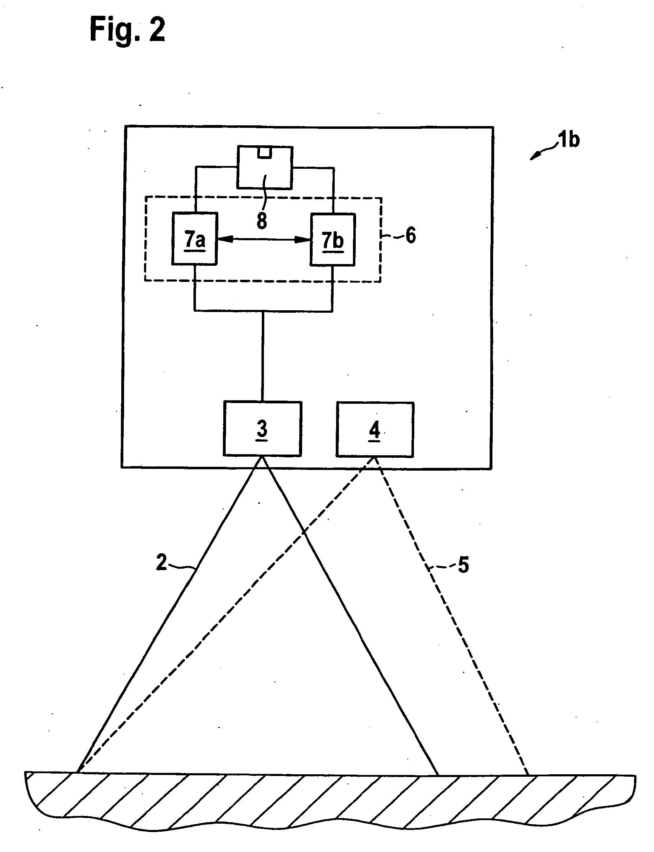

Figur 2 zeigt schematisch den Aufbau eines optischen Sensors 1b der Vorrichtung 1 gemäß Figur 1. Der optische Sensor 1b ist in einem Gehäuse integriert und weist zur Detektion von Objekten innerhalb einer Schutzzone 2 eine Kamera 3 auf. Die Kamera 3 besteht im vorliegenden Fall aus einer CCD-Zeile, das heißt einem CCD-Sensor mit einer zeilenförmigen Anordnung von Empfangselementen. Alternativ kann die Kamera 3 auch von einer CMOS-Zeile gebildet sein. Bei derartigen zeilenförmigen Kameras 3 bildet die Schutzzone 2 einen flächigen Bereich. Generell können mit dem optischen Sensor 1b auch Schutzzonen 2 in form von dreidimensionalen Bereichen überwacht werden. In diesem Fall besteht die Kamera 3 aus einem CCD-Sensor oder einem CMOS-Sensor mit einer matrixförmigen Anordnung von Empfangselementen. Generell können diese CMOS- oder CCD-Sensoren als distanzmessende Sensoren ausgebildet sein. Zur Ausleuchtung der Schutzzone 2 weist der optische Sensor 1b ein Beleuchtungssystem 4 auf. Mit den vom Beleuchtungssystem 4 emittierten Lichtstrahlen 5 wird die gesamte Schutzzone 2 ausgeleuchtet, wobei im einfachsten Fall mit dem Beleuchtungssystem 4 hierzu ein stationäres Lichtstrahlbündel emittiert wird. Alternativ kann das Beleuchtungssystem 4 auch als Scanner ausgebildet sein. Der Scanner weist einen Sender auf, der Sendelichtstrahlen emittiert, die mittels einer Ablenkeinheit zur Ausleuchtung der Schutzzone 2 periodisch abgelenkt werden.

Die mit der Kamera 3 generierten Signale werden einer Auswerteeinheit 6 zugeführt. Zum Einsatz des optischen Sensors 1 als Bestandteil der Vorrichtung 1 im Bereich des Personenschutzes und zur Erfüllung des hierfür geforderten Sicherheitsniveaus weist die Auswerteeinheit 6 einen redundanten Aufbau auf. Im vorliegenden Fall besteht die Auswerteeinheit 6 aus zwei sich gegenseitig zyklisch überwachenden Mikroprozessoren 7a, b. Prinzipiell können auch einkanalige Auswerteeinheiten 6 mit einer Überwachungseinrichtung eingesetzt werden. Die Signale der Kamera 3 werden zur Auswertung in beide Mikroprozessoren 7a, b eingelesen. Hierzu ist die Kamera 3 über Zuleitungen mit beiden Mikroprozessoren 7a, b verbunden. Weiterhin erfolgt in der Auswerteeinheit 6 auch die Ansteuerung des Beleuchtungssystems 4, welches mit nicht dargestellten Zuleitungen mit der Auswerteeinheit 6 verbunden ist.

Die Ausgangssignale der Auswerteeinheit werden über einen Ausgang 8 der Anschalteinheit 1a zugeführt. Zur Erfüllung des Sicherheitsniveaus ist der Ausgang 8 als sicherer, überwachter Ausgang 8 ausgebildet.

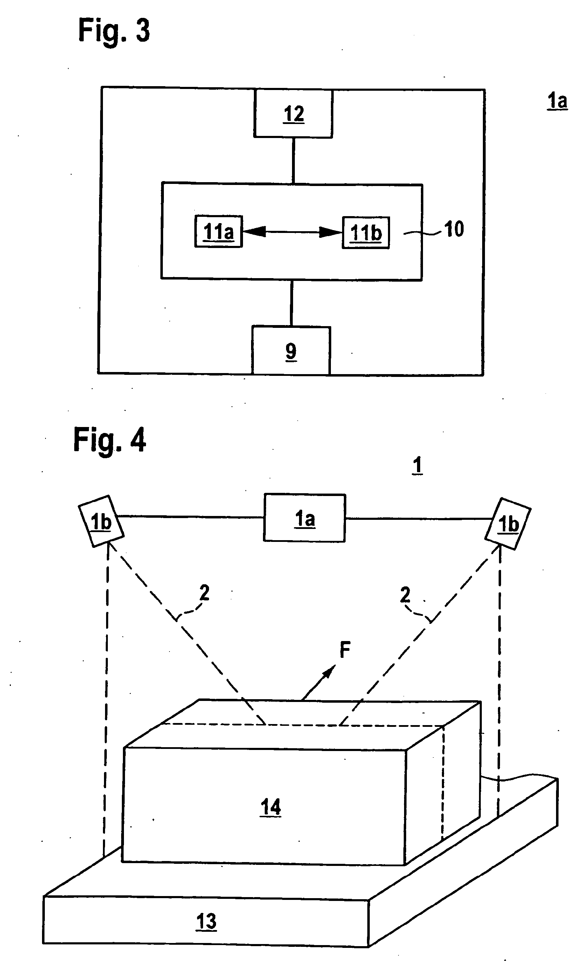

Der Aufbau der Anschalteinheit 1a ist in Figur 3 schematisch dargestellt. Die Signale der optischen Sensoren 1b werden über eine sichere Eingangsschaltung 9 in die Anschalteinheit 1a eingelesen. Die Auswertung dieser Signale erfolgt in einem redundanten Rechnersystem 10 bestehend aus zwei sich gegeneinander überwachenden Rechnereinheiten 11a, b.

Aus den Signalen der optischen Sensoren 1b wird in der Anschalteinheit 1a ein binäres Schaltsignal generiert, welches über einen sicheren Schaltausgang 12 an ein Arbeitsmittel ausgegeben wird, an welchem die Gefahrenbereichsüberwachung durchgeführt wird. In Abhängigkeit des aktuellen Schaltzustands des Schaltsignals wird das Arbeitsmittel in Betrieb gesetzt oder abgeschaltet. Um Gefährdungen insbesondere für Personen auszuschließen, wird bei einer Objekterkennung im Gefahrenbereich ein einer Objektmeldung entsprechender Schaltzustand des Schaltsignals generiert, wodurch das Arbeitsmittel abgeschaltet wird. Nur bei freiem Gefahrenbereich nimmt das Schaltsignal einen zweiten Schaltzustand ein, mit welchem das Arbeitsmittel in Betrieb gesetzt wird.

Zur Objekterfassung im Gefahrenbereich können optische Sensoren 1b für die Vorrichtung 1 eingesetzt werden, die Kameras 3 aufweisen, deren Empfangselemente als Messwerte Grauwerte liefern.

Im vorliegenden Fall werden optische Sensoren 1b eingesetzt, mittels derer Distanzmessungen durchführbar sind. Die einzelnen Empfangselemente der Kameras 3 der optischen Sensoren 1b liefern dabei distanzabhängige Messwerte. Zur Durchführung der Distanzmessungen wird dabei das Beleuchtungssystem 4 eines optischen Sensors 1b im Pulsbetrieb betrieben. Die Distanzmessung kann dabei mit einer Einzel-Puls-Messung durchgeführt werden. Alternativ kann eine Serie von Lichtpulsen des Beleuchtungssystems 4 zur Durchführung einer Distanzmessung verwendet werden, wobei dann die Signale der einzelnen Empfangselemente über die Serie der einzelnen Lichtpulse des Beleuchtungssystems 4 aufintegriert werden.

Im vorliegenden Ausführungsbeispiel erfolgt in der Auswerteeinheit 6 der optischen Sensoren 1b eine Vorverarbeitung derart, dass aus den Messwerten der Kameras 3 Distanzprofile berechnet werden die in die Anschalteinheit 1a eingelesen werden. Dort wird aus den Distanzprofilen der einzelnen optischen Sensoren 1b das Schaltsignal abgeleitet.

Zusätzlich übernimmt die Anschalteinheit 1a die Synchronisierung der beiden optischen Sensoren 1b der Vorrichtung 1 gemäß Figur 1. Die Synchronisierung erfolgt derart, dass das Beleuchtungssystem 4 eines optischen Sensors 1b jeweils nur Lichtpulse in den Sendepausen des Beleuchtungssystems 4 des jeweils anderen optischen Sensors 1b sendet. Dadurch können gegenseitige optische Beeinflussungen vermieden werden.

Für den Fall dass zur Durchführung einer Distanzmessung in einem optischen Sensor 1b eine Serie von Lichtpulsen des Beleuchtungssystems 4 herangezogen wird, kann das Beleuchtungssystem 4 des jeweils anderen optischen Sensors 1b seine Lichtpulse erst jeweils nach Ende der Serie der Lichtpulse des ersten Beleuchtungssystems 4 emittieren. Alternativ kann die Durchführung von Distanzmessungen in den optischen Sensoren 1b quasi parallel dadurch erfolgen, dass jeweils auf einen Einzellichtpuls einer Serie des Beleuchtungssystems 4 des ersten optischen Sensors 1b sofort ein Einzelpuls einer Serie des zweiten optischen Sensors 1b emittiert wird, so dass eine Ineinanderschachtelung der Serien von Einzellichtpulsen beider optischer Sensoren 1b erfolgt.

Figur 4 zeigt eine Applikation der Vorrichtung 1 gemäß Figur 1 zur Gefahrenbereichs-Überwachung an einem Transportband 13. Dieses Transportband 13 bildet zusammen mit einem nicht dargestellten Roboter ein Arbeitsmittel. Wie aus Figur 4 ersichtlich, sind die beiden optischen Sensoren 1b der Vorrichtung 1 an oberhalb des Transportbands 13 angeordnet. Dabei sind die optischen Sensoren 1b an gegenüberliegenden Seiten des Transportbands 13 so angeordnet, dass deren Blickwinkel schräg von oben auf das Transportband 13 gerichtet sind. Somit wird die in Figur 4 erhaltene Anordnung von sich teilweise überlappenden Schutzzonen 2 der optischen Sensoren 1b erhalten, die sich zu einem in einer vertikalen Ebene orientierten Gefahrenbereich ergänzen.

Um Gefährdungen von Personen oder generell sicherheitskritischen Objekte auszuschließen, wird bei einer Detektion eines derartigen sicherheitskritischen Objekts in dem Gefahrenbereich eine Objektmeldung generiert, wodurch das Arbeitsmittel, das heißt im vorliegenden Fall der Roboter und das Transportband 13 deaktiviert, das heißt stillgesetzt werden.

Figur 4 zeigt eine auf dem Transportband 13 transportierte Palette 14, die in einer Förderrichtung F gefördert wird und die mit dem Roboter aufgenommen und bearbeitet werden soll. Da somit die Palette 14 als Werkstück ein nicht sicherheitskritisches Objekt darstellt, welches durch den Gefahrenbereich hindurch dem Roboter zugeführt werden muss, würde ein durch die Detektion der Palette 14 mittels des optischen Sensors 1 generierter Abschaltbefehl für das Arbeitsmittel einen unnötigen Stillstand bedeuten.

Um derartige unnötige Stillstände zu vermeiden erfolgt in der Vorrichtung 1 eine Erkennung derartiger nicht sicherheitskritischer Objekte sowie deren Unterscheidung von sicherheitskritischen Objekten.

Die Erfassung der Palette 14 als nichtsicherheitskritischem Objekt erfolgt dabei bei Eintauchen der Vorderflanke der Palette 14 in dem Gefahrenbereich. Dabei wird die linke Hälfte der Palette 14 mit dem linken optischen Sensor 1b und die rechte Hälfte der Palette 14 mit dem rechten optischen Sensor 1b erfasst. Die Palette 14 wird durch Erfassen der deren linker Kante mit dem linken optischen Sensor 1b und der rechten Kante mit dem rechten optischen Sensor 1b in der Anschalteinheit 1a durch Auswertung der Messwerte beider optischer Sensoren 1b erkannt. Die Erkennung der Palette 14 erfolgt dabei in der Anschalteinheit 1a durch Vergleich der Messwerte mit eingelernten, die Palette 14 kennzeichnenden Parameterwerten.

Bei der Detektion eines nicht sicherheitskritischen Objekts wie der in Figur 4 dargestellten Palette 14 wird der Anschalteinheit 1a ein Überbrückungssignal, das heißt, ein Mutingsignal generiert. Mit diesem wird in der Anschalteinheit 1a als Teilbereich des Gefahrenbereichs ein Muting-Bereich definiert und aktiviert.

Die Auswertung in der Anschalteinheit 1a der Vorrichtung 1 erfolgt dann derart, dass eine Objektdetektion innerhalb des Muting-Bereichs nicht zur Generierung einer Objektmeldung und damit nicht zu einem Abschalten des Arbeitsmittels führt.

Bei dem Ausführungsbeispiel gemäß Figur 4 wird bei exakt mittiger Ausrichtung der Palette 14 während des gesamten Durchfahrens der Palette durch die Schutzzone 2 stets die Palette 14 auf dem selben Bereich A der Kamera 3 (Figur 3) abgebildet.

Da dieser Bereich von der Palette 14 ausgefüllt ist und in diesen somit kein sicherheitskritisches Objekt mehr eindringen kann, wird im einfachsten Fall der von der Palette 14 erfüllte Teil des Gefahrenbereichs als Muting-Bereich definiert. Der so gebildete Muting-Bereich erstreckt sich über Teilbereiche der Schutzzonen 2 beider optischer Sensoren 1b. Während ein Eindringen eines Objekts in den Muting-Bereich nicht zur Generierung einer Objektmeldung führt, führt ein Objekteingriff in den nicht gemuteten Bereich des Gefahrenbereichs zur Generierung einer Objektmeldung und damit zu einem Abschalten des Arbeitsmittels.

Wie aus der Anordnung in Figur 4 ersichtlich, erstreckt sich die Palette 14 nahezu über die gesamte Breite des Transportbandes 13. Ist dieses beispielsweise von Zäunen seitlich umgeben ist gewährleistet, dass bei einer in dem Gefahrenbereich befindlichen Palette 14 auch seitlich am Transportband 13 keine Person eindringen kann. Somit kann alternativ der gesamte Gefahrenbereich als Muting-Bereich aktiviert werden.

Im vorliegenden Ausführungsbeispiel ist der Muting-Bereich so lange aktiv, solange sich die Palette 14 als nicht sicherheitskritisches Objekt innerhalb des Gefahrenbereichs befindet.

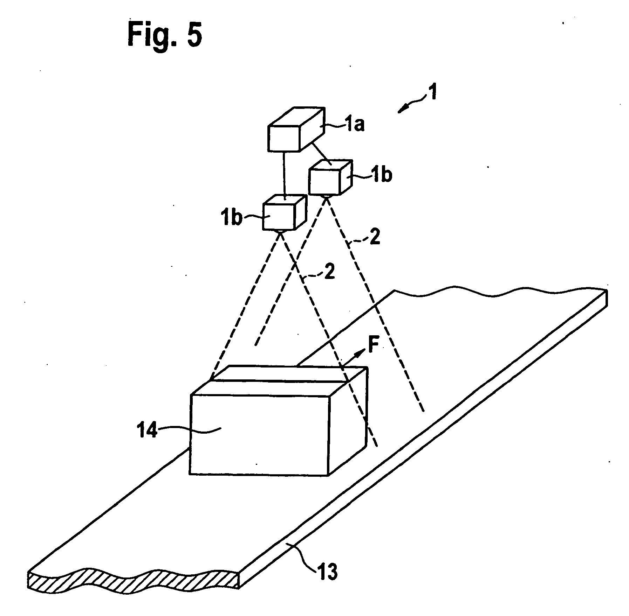

Figur 5 zeigt eine Variante der Ausführungsform gemäß Figur 4. Auch in diesem Fall ist als Arbeitsmittel ein Transportband 13 mit einem zugeordneten Roboter vorgesehen. Die Vorrichtung 1 weist wiederum eine Anschalteinheit 1a mit zwei optischen Sensoren 1b auf. Auf dem Transportband 13 wird, wie aus Figur 5 ersichtlich, in Übereinstimmung mit der Ausführungsform gemäß Figur 4 als nichtsicherheitskritischem Objekt eine Palette 14 in Förderrichtung F gefördert. Im Unterschied zur Ausführungsform gemäß Figur 4 sind die optischen Sensoren 1b der Vorrichtung 1 in Förderrichtung F der Palette 14 hintereinander angeordnet. Die Schutzzonen 2 der optischen Sensoren 1b liegen jeweils in einer vertikalen, senkrecht zur Förderrichtung orientierten Ebene. Diese räumlich getrennten Schutzzonen 2 bilden zusammen den Gefahrenbereich.

Die Definition von Muting-Bereich erfolgt analog zur Ausführungsform gemäß Figur 4 anhand der Detektion der Palette 14 als nichtsicherheitskritischem Objekt. Dabei wird im vorliegenden Fall zweckmäßig für jede Schutzzone 2 eines optischen Sensors 1b der von der Palette 14 überdeckte Bereich als Muting-Bereich definiert. Im Unterschied zur Ausführungsform gemäß Figur 4 werden bei der Ausführungsform gemäß Figur 5 somit zwei separate Muting-Bereiche definiert. Diese werden vorzugsweise jeweils mit Eindringen der Palette 14 in die jeweilige Schutzzone 2 aktiviert und bleiben so lange aktiviert, wie die Palette 14 in dieser Schutzzone 2 detektiert wird.

Mit der separaten Erfassung von Objekten in den Schutzzonen 2 der optischen Sensoren 1b als Gefahrenbereich kann die Bewegungsrichtung und/oder die Geschwindigkeit eines Objekts erfasst werden.

Bezugszeichenliste
- (1): Vorrichtung
- (1a): Anschalteinheit
- (1b): optischer Sensor
- (2): Schutzzone
- (3): Kamera
- (4): Beleuchtungssystem
- (5): Lichtstrahlen
- (6): Auswerteeinheit
- (7a): Mikroprozessoren
- (7b): Mikroprozessoren
- (8): Ausgang
- (9): Eingangsschaltung
- (10): Rechnersystem
- (11a): Rechnereinheit
- (11b): Rechnereinheit
- (12): Schaltausgang
- (13): Transportband
- (14): Palette

## Patentansprüche

1. Vorrichtung (1) zur Überwachung eines Gefahrenbereichs an einem Arbeitsmittel, mit einer Anordnung von Sensoren, welche jeweils eine Kamera (3) zur Erfassung einer Schutzzone (2) als Teil des Gefahrenbereichs aufweisen, und mit einer Anschalteinheit (1a), in welche von den Sensoren generierte Signale eingelesen werden, aus welchen in der Anschalteinheit (1a) ein Schaltsignal generiert wird, in Abhängigkeit dessen das Arbeitsmittel aktiviert oder abgeschaltet ist, wobei das Arbeitsmittel abgeschaltet wird, falls in der Anschalteinheit (1a) bei Erfassen eines sicherheitskritischen Objekts innerhalb des Gefahrenbereichs als Schaltsignal eine Objektmeldung generiert wird, **dadurch gekennzeichnet, dass** bei Erfassen eines nichtsicherheitskritischen Objekts innerhalb des Gefahrenbereichs wenigstens ein Bereich dieses Gefahrenbereichs als Muting-Bereich definiert wird, so dass ein Eindringen eines Objekts in diesen Bereich nicht zu einer Generierung einer Objektmeldung führt

2. Vorrichtung nach Anspruch 1, **dadurch gekennzeichnet, dass** die Kamera (3) eines optischen Sensors (1b) von einer zeilenförmigen oder matrixförmigen Anordnung von Empfangselementen gebildet ist.

3. Vorrichtung nach Anspruch 2, **dadurch gekennzeichnet, dass** die Kamera (3) von einem insbesondere distanzmessenden CMOS-Sensor oder einem CCD-Sensor gebildet ist.

4. Vorrichtung nach einem der Ansprüche 1 bis 3, **dadurch gekennzeichnet, dass** jeder optische Sensor (1b) ein Beleuchtungssystem (4) zur Ausleuchtung der jeweiligen Schutzzone (2) aufweist.

5. Vorrichtung nach einem der Ansprüche 1 bis 4, **dadurch gekennzeichnet, dass** die optischen Sensoren (1b) in unterschiedlichen Blickwinkeln auf einen Gefahrenbereich ausgerichtet sind.

6. Vorrichtung nach Anspruch 5, **dadurch gekennzeichnet, dass** die Schutzzonen (2) der einzelnen optischen Sensoren (1b) teilweise überlappen.

7. Vorrichtung nach einem der Ansprüche 1 bis 4, **dadurch gekennzeichnet, dass** die optischen Sensoren (1b) eine Hintereinanderanordnung bilden.

8. Vorrichtung nach einem der Ansprüche 1 bis 7, **dadurch gekennzeichnet, dass** als Signale in den optischen Sensoren (1b) generierte Messwerte in die Anschalteinheit (1a) eingelesen werden.

9. Vorrichtung nach Anspruch 8, **dadurch gekennzeichnet, dass** die Messwerte von Grauwerten oder Distanzwerten gebildet sind.

10. Vorrichtung nach einem der Ansprüche 1 bis 7, **dadurch gekennzeichnet, dass** in den optischen Sensoren (1b) jeweils vorverarbeitete Messwerte generiert werden, welche als Signale in die Anschalteinheit (1a) eingelesen werden.

11. Vorrichtung nach einem der Ansprüche 1 bis 7, **dadurch gekennzeichnet, dass** in den optischen Sensoren (1b) jeweils Objektfeststellungssignale generiert werden, welche als Signale in die Anschalteinheit (1a) eingelesen werden.

12. Vorrichtung nach einem der Ansprüche 10 oder 11, **dadurch gekennzeichnet, dass** die optischen Sensoren (1b) jeweils eine Auswerteeinheit (6) zur Generierung von vorverarbeiteten Messwerten und/oder Objektfeststellungssignalen aufweisen.

13. Vorrichtung nach Anspruch 12, **dadurch gekennzeichnet, dass** die Auswerteeinheiten (6) jeweils einen zweikanaligen Aufbau oder einen einkanaligen Aufbau mit einer Überwachungseinrichtung aufweisen.

14. Vorrichtung nach einem der Ansprüche 1 bis 13, **dadurch gekennzeichnet, dass** die Anschalteinheit (1a) einen zweikanaligen Aufbau aufweist.

15. Vorrichtung nach einem der Ansprüche 1 bis 14, **dadurch gekennzeichnet, dass** mittels der Anschalteinheit (1a) eine Synchronisation der optischen Sensoren (1b) durchführbar ist.

16. Vorrichtung nach Anspruch 15, **dadurch gekennzeichnet, dass** zur Synchronisation eines ersten optischen Sensors (1b) auf einen zweiten optischen Sensoren (1b) das Beleuchtungssystem (4) des einen optischen Sensors (1b) jeweils nur in den Sendepausen des Beleuchtungssystems (4) des jeweils anderen optischen Sensors (1b) aktiviert ist.

17. Vorrichtung nach einem der Ansprüche 1 bis 16, **dadurch gekennzeichnet, dass** die Erfassung des nichtsicherheitskritischen Objekts in der Schutzzone (2) eines optischen Sensors (1b) oder in Schutzzonen (2) mehrerer optischer Sensoren (1b) erfolgt.

18. Vorrichtung nach Anspruch 17, **dadurch gekennzeichnet, dass** zur Erfassung eines nichtsicherheitskritischen Objekts wenigstens ein Teilbereich wenigstens einer Kamera (3) herangezogen wird.

19. Vorrichtung nach einem der Ansprüche 1 bis 18, **dadurch gekennzeichnet, dass** sich der überbrückte Bereich über eine oder mehrere Schutzzonen (2) erstreckt.

## Claims

1. Device (1) for monitoring a risk area at work equipment, with an arrangement of sensors, which each comprise a camera (3) for detecting a protection zone (2) as part of the risk area, and with a switch-on unit (1a) into which signals generated by the sensors can be read, from which a switching signal, in dependence on which the working equipment is activated or switched-off, is generated in the switch-on unit (1 a), wherein the work equipment is switched off if in the case of detection of a safety-critical object within the risk area an object report as switching signal is generated in the switch-on unit (1a), **characterised in that** on detection of a non-safety-critical object within the risk area at least a region of this risk area is defined as muting region so that penetration of an object into this region does not lead to generation of an object report.

2. Device according to claim 1, **characterised in that** the camera (3) of an optical sensor (1b) is formed by a line-shaped or matrix-shaped arrangement of receiving elements.

3. Device according to claim 2, **characterised in that** the camera (3) is formed by a - in particular - distance-measuring CMOS sensor or a CCD sensor.

4. Device according to any one of claims 1 to 3, **characterised in that** each optical sensor (1b) has an illuminating system (4) for illuminating the respective protection zone (2).

5. Device according to any one of claims 1 to 4, **characterised in that** the optical sensors (1 b) are oriented onto the risk area at different viewing angles.

6. Device according to claim 5, **characterised in that** the protection zones (2) of the individual optical sensors (1 b) partly overlap.

7. Device according to any one of claim 1 to 4, **characterised in that** the optical sensors (1 b) form an arrangement of one behind the other.

8. Device according to any one of claims 1 to 7, **characterised in that** measurement values generated in the optical sensors (1b) are read into the switch-on unit (1a) as signals.

9. Device according to claim 8, **characterised in that** the measurement values are formed by gray values or distance values.

10. Device according to any one of claims 1 to 7, **characterised in that** measurement values, which are each pre-processed and which are read into the switch-on unit (1a) as signals, are generated in the optical sensors (1b).

11. Device according to any one of claims 1 to 7, **characterised in that** respective object detection signals, which are read into the switch-on unit (1a) as signals, are generated in the optical sensors (1b).

12. Device according to one of claims 10 and 11, **characterised in that** the optical sensors (1b) each comprise an evaluating unit (6) for generating pre-processed measurement values and/or object detection signals.

13. Device according to claim 12, **characterised in that** the evaluating units (6) each have a two-channel construction or a single-channel construction with a monitoring device.

14. Device according to any one of claims 1 to 13, **characterised in that** the switch-on unit (1 a) has a two-channel construction.

15. Device according to any one of claims 1 to 14, **characterised in that** a synchronisation of the optical sensors (1b) can be performed by means of the switch-on unit (1 a).

16. Device according to claim 15, **characterised in that** for synchronisation of a first optical sensor (1 b) with a second optical sensor (1 b) the illuminating system (4) of the one optical sensor (1b) is activated in each instance only in the transmission pauses of the illuminating system (4) of the respective other optical sensor (1 b).

17. Device according to any one of claims 1 to 16, **characterised in that** the detection of the non-safety-critical object is carried out in the protection zone (2) of an optical sensor (1 b) or in protection zones (2) of several optical sensors (1b).

18. Device according to claim 17, **characterised in that** at least a sub-region of at least one camera (3) is utilised for detection of a non-safety-critical object.

19. Device according to any one of claims 1 to 18, **characterised in that** the bridged-over region extends over one or more protection zones (2).

## Revendications

1. Dispositif (1) de surveillance d'une zone dangereuse sur un outil de travail, comprenant un agencement de capteurs qui présentent chacun une caméra (3) pour détecter une zone de protection (2) faisant partie de la zone dangereuse, et comprenant une unité de branchement (1a) dans laquelle sont lus les signaux générés par les capteurs, à partir desquels est généré dans l'unité de branchement (1a) un signal de commutation en fonction duquel l'outil de travail est activé ou désactivé, l'outil de travail étant désactivé si une signalisation d'objet est générée en tant que signal de commutation dans l'unité de branchement (1a) en cas de détection d'un objet critique pour la sécurité à l'intérieur de la zone dangereuse, **caractérisé en ce qu'**en cas de détection d'un objet non critique pour la sécurité à l'intérieur de la zone dangereuse, au moins une zone de cette zone dangereuse est définie comme zone d'inhibition, de sorte qu'une pénétration d'un objet dans cette zone n'entraîne pas la génération d'une signalisation d'objet.

2. Dispositif selon la revendication 1, **caractérisé en ce que** la caméra (3) d'un capteur optique (1b) est formée par un agencement linéaire ou matriciel d'éléments de réception.

3. Dispositif selon la revendication 2, **caractérisé en ce que** la caméra (3) est formée par un capteur CMOS ou un capteur CCD en particulier de mesure de distance.

4. Dispositif selon une des revendications 1 à 3, **caractérisé en ce que** chaque capteur optique (1b) présente un système d'éclairage (4) pour éclairer la zone de protection (2) respective.

5. Dispositif selon une des revendications 1 à 4, **caractérisé en ce que** les capteurs optiques (1b) sont orientés à des angles de vue différents sur une zone dangereuse.

6. Dispositif selon la revendication 5, **caractérisé en ce que** les zones de protection (2) des différents capteurs optiques (1b) se chevauchent partiellement.

7. Dispositif selon une des revendications 1 à 4, **caractérisé en ce que** les capteurs optiques (1b) forment un agencement en série.

8. Dispositif selon une des revendications 1 à 7, **caractérisé en ce que** des valeurs de mesure générées dans les capteurs optiques (1b) sont lues en tant que signaux dans l'unité de branchement (1a).

9. Dispositif selon la revendication 8, **caractérisé en ce que** les valeurs de mesure sont formées de valeurs de gris ou de valeurs de distance.

10. Dispositif selon une des revendications 1 à 7, **caractérisé en ce que** des valeurs de mesure prétraitées sont générées dans les capteurs optiques (1b), lesquelles sont lues en tant que signaux dans l'unité de branchement (1a).

11. Dispositif selon une des revendications 1 à 7, **caractérisé en ce que** des signaux de détection d'objet sont générés dans les capteurs optiques (1b), lesquels sont lus en tant que signaux dans l'unité de branchement (1a).

12. Dispositif selon une des revendications 10 ou 11, **caractérisé en ce que** les capteurs optiques (1b) présentent chacun une unité d'évaluation (6) pour générer des valeurs de mesure prétraitées et/ou des signaux de détection d'objet.

13. Dispositif selon la revendication 12, **caractérisé en ce que** les unités d'évaluation (6) présentent chacune une structure à deux canaux ou une structure à un canal avec un dispositif de surveillance.

14. Dispositif selon une des revendications 1 à 13, **caractérisé en ce que** l'unité de branchement (1a) présente une structure à deux canaux.

15. Dispositif selon une des revendications 1 à 14, **caractérisé en ce que** l'unité de branchement (1a) permet de réaliser une synchronisation des capteurs optiques (1b).

16. Dispositif selon la revendication 15, **caractérisé en ce que** pour la synchronisation d'un premier capteur optique (1b) sur un deuxième capteur optique (1b), le système d'éclairage (4) d'un capteur optique (1b) est activé seulement dans les pauses d'émission du système d'éclairage (4) de l'autre capteur optique (1b).

17. Dispositif selon une des revendications 1 à 16, **caractérisé en ce que** la détection de l'objet non critique pour la sécurité a lieu dans la zone de protection (2) d'un capteur optique (1b) ou dans les zones de protection (2) de plusieurs capteurs optiques (1b).

18. Dispositif selon la revendication 17, **caractérisé en ce qu'**au moins une zone partielle d'au moins une caméra (3) est utilisée pour la détection d'un objet non critique pour la sécurité.

19. Dispositif selon une des revendications 1 à 18, **caractérisé en ce que** la zone inhibée s'étend sur une ou plusieurs zones de protection (2).
